# EUROPÄISCHE PATENTSCHRIFT

(11) **EP 1 653 271 B1**
(45) Veröffentlichungstag und Bekanntmachung des Hinweises auf die Patenterteilung: **13.08.2008**
(21) Anmeldenummer: 04025836.0
(22) Anmeldetag: 29.10.2004
(51) Int. Cl.: G02B 27/34, F41G 1/34

(54) **Strichplatte und deren Verwendung für ein Zielfernrohr**
Reticle and its use in a telescopic sight
Réticule et son utilisation dans une lunette de visée

(43) Veröffentlichungstag der Anmeldung: 03.05.2006
(73) Patentinhaber: SWAROVSKI OPTIK KG, 6067 Absam i. Tirol (AT)
(72) Erfinder: Menges, Dietmar, A-6067 Absam (AT); Zangerl, Alois, A-6233 Kramsach (AT)
(74) Vertreter: Kador & Partner

(56) Entgegenhaltungen:
- EP-A- 0 267 599
- EP-A- 0 886 163
- GB-A- 1 532 401
- US-A- 2 472 809
- US-A- 4 214 371
- US-A- 4 665 622
- SCHRODER G: "Technische Optik, 2.6 ANWENDUNG ASPHAERISCHER FLAECHEN" TECHNISCHE OPTIK. GRUNDLAGEN UND ANWENDUNGEN, WURZBURG, VOGEL BUCHVERLAG, DE, 1990, Seiten 54-55, XP002222505 ISBN: 3-8023-0067-X

## Beschreibung

Die Erfindung bezieht sich auf eine Strichplatte aus einem Träger und einem auf der Oberfläche des Trägers vorgesehenen Strichbild, welches Licht einer seitlich angeordneten Lichtquelle senkrecht zur Trägeroberfläche abstrahlt.

Strichplatten werden in dem Beobachtungsstrahlengang von optischen Beobachtungs- und Zielgeräten, insbesondere Zielfernrohren vorgesehen. Die auf den Träger aufgebrachte absehbare Zielmarkierung wird dabei als Strichbild bezeichnet. Beim Jagen in der Morgen- oder Abenddämmerung ist das Strichbild oft auf dem dunklen Wildkörper nicht zu erkennen. Es sind daher verschiedene Lösungen zur Beleuchtung des Strichbildes vorgeschlagen worden. So ist es bekannt, das Strichbild in den als Glasplatte ausgebildeten Träger einzuätzen und mit Pigmenten aufzufüllen. Durch Beleuchtung mit einer Lichtquelle hebt es sich aufgrund von Lichtstreuung und Lichtbeugung des Füllmaterials hell vom Hintergrund ab. Allerdings wird bei der bekannten Strichplatte nur ein sehr geringer Teil des Lichts in Richtung des Beobachters umgelenkt. Nach EP 0 886 163 B1 wird als Strichbild daher ein Beugungsgitter verwendet, das auf den Träger aufgebracht wird. Dabei wird die Tatsache ausgenutzt, dass nach der Beugungstheorie die erste Beugungsordnung eine besonders hohe Lichtintensität aufweist. Damit wird zwar die Helligkeit des beleuchteten Strichbildes etwas verbessert, jedoch wird das Licht nicht gleichmäßig ausgestrahlt, das heißt, die Helligkeit ist von der Betrachtungsrichtung abhängig. Auch wird nur ein sehr geringer Teil der eingebrachten Lichtleistung in die Betrachtungsrichtung umgelenkt.

Ferner ist es aus DE 10 051 448 A1 bekannt, den Träger mit einem Lichtleiter einzufassen, der von der Lichtquelle beleuchtet wird. Da damit das Licht in einen zu großen Raumwinkel gesteuert wird, ist für eine ausreichende Helligkeit der Energieverbrauch erheblich. Nach DE 29 903 989 U1 wird ein Strichbild, nämlich eine Zielmarkierung in der Mitte der Strichplatte, in ein weiteres, auf dem Träger aufgebrachtes Strichbild in Form eines Fadenkreuzes von einer seitlich an der Strichplatte angeordneten Projektionseinrichtung über einen Strahlenteiler im Beobachtungsstrahlengang auf den Träger projiziert. Dadurch wird zwar ein helles Strichbild erzielt, jedoch sind der Platzbedarf und das Gewicht erheblich. Zudem wird die Lichttransmission durch die Teilerschicht zwischen den beiden Prismen des Strahlenteilers reduziert. Auch ist es schwierig, die beiden Strichbilder zueinander zu justieren. Aus EP 0 718 585 B 1 ist ein Absehen bekannt, das einen beleuchteten Ring mit Balken als Zielmarkierung aufweist, die zur Bildung beleuchteter Punkte an der Spitze mit einer Reflexionsfläche versehen sind.

Aus EP-A-0 267 599 ist eine Fliegenaugenlinseneinheit bekannt, mit der eine gleichmäßige Lichtverteilung beispielsweise auf einer photosensitiven Schicht zur Herstellung integrierter Schaltungen erreicht werden soll. Dabei ist die Lichtquelle in einem Parabolspiegel in einem ersten Brennpunkt angeordnet, wobei ihr Licht über einen Umlenkspiegel auf die Fliegenaugenlinseneinheit geworfen wird, die den zweiten Brennpunkt bildet und von dort über einen zweiten Umlenkspiegel und einen Kollimator auf die photosensitive Schicht.

Aufgabe der Erfindung ist es, ein zum Beispiel in die Zieloptik eines Zielfernrohres eingebautes Strichbild bei möglichst geringem Energieverbrauch ohne nennenswerten zusätzlichen Platzbedarf kostengünstig mit maximaler Helligkeit gleichmäßig, das heißt unabhängig von der Betrachtungsrichtung, auszuleuchten.

Dies wird erfindungsgemäß mit der im Anspruch 1 gekennzeichneten Strichplatte erreicht. In den Unteransprüchen sind vorteilhafte Ausgestaltungen der erfindungsgemäßen Strichplatte wiedergegeben.

Nach der Erfindung ist seitlich neben dem Träger der Strichplatte ein Spiegel mit einer Spiegelfläche angeordnet, die derart gekrümmt ist, dass der Spiegel zwei Brennpunkte aufweist. In, jedenfalls im Bereich des einen Brennpunktes befindet sich die Lichtquelle. Die von dem Spiegel reflektierten Lichtstrahlen laufen zu dem Strichbild zusammen,' das im Bereich des zweiten Brennpunktes liegt. Das Strichbild kann dabei entweder auf der ersten oder auf der zweiten Fläche der Strichplatte liegen. Das Strichbild auf der ersten Fläche kann von den Lichtstrahlen direkt erreicht werden. Das Strichbild auf der zweiten Fläche der Strichplatte wird durch Totalreflexion der Lichtstrahlen an der ersten Fläche der Strichplatte erreicht.

Die im Querschnitt konkav gekrümmte Spiegelfläche kann als Ellipsoid ausgebildet sein, jedoch ist auch jede andere sphärisch gekrümmte Spiegelfläche einsetzbar, die zwei Brennpunkte besitzt. Dabei kann einer der Brennpunkte auch im Unendlichen liegen, da auch die Beleuchtung des Strichbildes mit einem parallelen Strahlengang möglich ist.

Die Spiegelfläche ist vorzugsweise an der Rückseite des mit der Lichtquelle von vorne angestrahlten Spiegels vorgesehen. Die Rückseite des Spiegels kann dabei dem Okular zugewandt sein. Der Spiegel kann als Kunststoffteil ausgebildet sein. Als Lichtquelle wird vorzugsweise eine Leuchtdiode verwendet. Der Träger des Strichbilds ist vorzugsweise Glas oder ein transparentes Material.

Der Spiegel ist an der Strichplatte befestigt, insbesondere durch Kleben.

Neben dem erfindungsgemäß beleuchteten Strichbild, beispielsweise in Form eines Punktes in der Mitte der Strichplatte, kann die Strichplatte ein beliebiges zweites Strichbild zum Beispiel in Form eines Fadenkreuzes aufweisen, insbesondere mit einem mittleren senkrechten Balken zwischen zwei Querbalken.

Das erfindungsgemäß beleuchtete Strichbild kann durch eine beugende und/oder streuende Mikrostruktur zum Beispiel durch Ätzung oder ein Beugungsgitter an der Trägeroberfläche gebildet sein. Bei einem eingeätzten oder eingearbeitetem Strichbild kann in die gebildete Vertiefung ein Füllmaterial aus Pigmenten eingebracht werden, damit sich bei Beleuchtung mit der Lichtquelle das Strichbild aufgrund von Lichtstrahlung und Lichtbeugung an den Pigmenten hell vom Hintergrund abhebt. Dabei können photoluminiszierende Pigmente verwendet werden, die z.B. unter UV-Bestrahlung sichtbares Licht abgeben.

Das Strichbild aus einem Beugungsgitter kann entsprechend EP 0 886 163 B1 ausgebildet sein. Das heißt, es kann aus abwechselnd angeordneten transparenten Lücken und lichtundurchlässigen Stegen bestehen. Das Verhältnis der Breite der Stege zur Breite der Lücken ist vorzugsweise größer oder gleich 1:1. Die Teilungsperiode des Amplitudengitters ist nach der Beugungsformel von der Lichtwellenlänge, dem Winkel des eintretenden und des austretenden Lichts sowie vom Brechungsindex der Luft und dem Material des Trägers abhängig.

Durch die Fokussierung des Lichtes am Strichbild wird erfindungsgemäß ein Strichbild mit hoher Leuchtdichte erhalten. Für eine gleichmäßige Helligkeitsverteilung über den Betrachtungswinkel besitzt das aus dem Strichbild austretende Licht vorzugsweise den selben Öffnungswinkel wie die nachgeschaltete Beobachtungsoptik, also das Okular. Dies wird durch den Spiegel und dessen Auslegung gemeinsam mit dem Beugungsgitter erreicht.

Das Strichbild strahlt das Licht der seitlich angeordneten Lichtquelle vorzugsweise senkrecht zur Trägeroberfläche ab. Mit einem Beugungsgitter sind jedoch auch andere Winkel als 90 Grad möglich. Auch ist zu berücksichtigen, dass die Strahlen in einem bestimmten Öffnungswinkel austreten.

Mit der erfindungsgemäßen Strichplatte erfolgt eine helle gleichmäßige Ausleuchtung des Strichbildes. Da die Fokussierung und Umlenkung des Lichts mit einem Bauteil, nämlich dem Spiegel erfolgt, ist das Bauvolumen gering. Da als Spiegel beispielsweise ein verspiegeltes Kunststoffteil verwendet werden kann, sind die zusätzlichen Kosten gering. Zudem ist mit der erfindungsgemäßen Strichplatte eine vielseitige Gestaltung des Strichbildes möglich. Durch den hohen Wirkungsgrad kann der Energieverbrauch entsprechend reduziert werden.

Nachstehend ist die Erfindung anhand der beigefügten Zeichnung beispielhaft näher erläutert.

### Darin zeigen:

- Figur 1:: eine Draufsicht auf eine Strichplatte;
- Figur 2:: einen Schnitt entlang der Linie II-II in Figur 1;
- Figur 3:: einen Schnitt durch eine andere Ausführungsform.

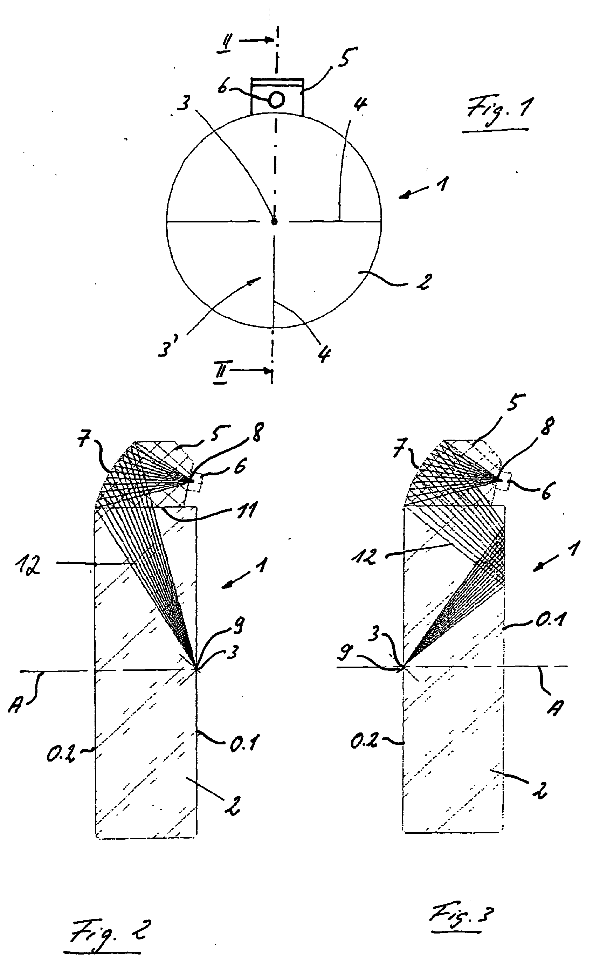

Gemäß Figur 1 weist die Strichplatte 1 einen Träger 2 in Form einer kreisförmigen Scheibe auf, die aus Glas oder einem anderen transparenten Material besteht. Auf dem Träger 2 ist in der optischen Achse A ein Strichbild 3 in Form eines Punktes vorgesehen. Das Strichbild 3 kann durch eine eingeätzte, mit Pigmenten gefüllte Vertiefung in der Oberfläche des Trägers 2 oder durch ein Beugungsgitter an der Oberfläche gebildet sein. Auf den Träger 2 ist ein zweites Strichbild 3' in Form eines Fadenkreuzes aufgebracht, das aus drei Balken 4 besteht, und zwar einem mittleren senkrechten Balken zwischen zwei Querbalken, die auf das Strichbild 3 in der Mitte der Strichplatte 1 ausgerichtet sind.

Gemäß Figur 1 und 2 ist an die Strichplatte 1 seitlich ein Spiegel 5 angeklebt. An der Vorderseite des Spiegels 5 ist als Lichtquelle 6 eine LED befestigt.

Die Rückseite des Spiegels 5 ist als Ellipsoid-Fläche ausgebildet und unter Bildung einer ellipsoid-förmigen Spiegelfläche 7 verspiegelt.

Die Spiegelfläche 7 weist gemäß Figur 2 zwei Brennpunkte 8 und 9 auf. In dem einen Brennpunkt 8 ist die Lichtquelle 6 angeordnet, während in dem zweiten Brennpunkt 9 das Strichbild 3 an der Oberfläche O.1 des Trägers 2 liegt. Zur stabilen Befestigung des Spiegels 5 an dem Träger 2 ist eine Klebung 11 vorgesehen. Mit zunehmendem radialem Abstand von dem Träger 2 verläuft die sphärisch gekrümmte Spiegelfläche 7 von der Oberfläche 0.2 weg nach vorne.

Während bei der Ausführungsform nach Figur 2 das Strichbild 3 im Bereich des zweiten Brennpunktes 9 der Spiegelfläche 7 angeordnet ist, der sich an der Trägeroberfläche O.1 befindet, der auch die Lichtquelle 6 an dem Spiegel 5 zugewandt ist, werden die Lichtstrahlen 12, die von der Spiegelfläche 7 zum zweiten Brennpunkt verlaufen einer Totalreflektion an der Trägeroberfläche O.1 unterworfen, um zu dem auf der anderen Trägeroberfläche O.2 angeordneten Strichbild 3 zusammenzulaufen.

## Patentansprüche

1. Vorrichtung, umfassend eine Lichtquelle (6) und eine Strichplatte (1) aus einem Träger (2) und einem auf der Oberfläche (O.1, O.2) des Trägers vorgesehenen Strichbild (3), welches Licht der seitlich angeordneten Lichtquelle (6) von der Trägeroberfläche abstrahlt, **gekennzeichnet durch** einen seitlich an der Strichplatte (1) befestigten Spiegel (5) mit zwei Brennpunkten (8, 9),wobei die Spiegelfläche (7) des Spiegels (5) konkav gekrümmt ausgebildet ist, die Lichtquelle (6) an der Vorderseite des Spiegels (5) im Bereich des ersten Brennpunktes (8) angeordnet ist und die zum zweiten Brennpunkt (9) verlaufendenden Lichtstrahlen (12) das Strichbild (3) beleuchten.

2. Vorrichtung nach Anspruch 1, **dadurch gekennzeichnet, dass** das Strichbild (3) im Bereich des zweiten Brennpunkts (9) angeordnet ist.

3. Vorrichtung nach Anspruch 1, **dadurch gekennzeichnet, dass** die zum zweiten Brennpunkt verlaufenden Lichtstrahlen (12) nach Totalreflexion (13) an einer der beiden Trägeroberflächen (O.1) im Bereich des auf der anderen Trägeroberfläche (O.2) angeordneten Strichbildes (3) zusammenlaufen.

4. Vorrichtung nach einem der vorstehenden Ansprüche, **dadurch gekennzeichnet, dass** die konkav gekrümmte Spiegelfläche (7) des Spiegels (5) als Ellipsoid ausgebildet ist.

5. Vorrichtung nach einem der vorstehenden Ansprüche, **dadurch gekennzeichnet, dass** die Spiegelfläche (7) an der Rückseite des mit der Lichtquelle (6) von vorne angestrahlten Spiegels (5) vorgesehen ist.

6. Vorrichtung nach einem der vorstehenden Ansprüche, **dadurch gekennzeichnet, dass** der Spiegel (5) an dem Träger (2) angeklebt ist.

7. Vorrichtung nach einem der vorstehenden Ansprüche, **dadurch gekennzeichnet, dass** das Strichbild (6) durch eine beugende und/oder streuende Mikrostrukturierung an der Trägeroberfläche gebildet wird.

8. Verwendung der Vorrichtung nach einem der vorstehenden Ansprüche für ein Zielfernrohr.

## Claims

1. An apparatus comprising a light source (6) and a reticle (1) comprising a carrier (2) and a line image (3) provided on the surface (0.1, 0.2) of the carrier, said image radiating light from the laterally disposed light source (6) from the carrier surface, **characterized by** a mirror (5) fastened laterally to the reticle (1) and having two foci (8, 9), the mirror surface (7) of the mirror (5) being of concavely curved configuration, the light source (6) being disposed on the front of the mirror (5) in the area of the first focus (8), and the light beams (12) passing to the second focus (9) illuminating the line image (3).

2. The apparatus according to claim 1, **characterized in that** the line image (3) is disposed in the area of the second focus (9).

3. The apparatus according to claim 1, **characterized in that** light beams (12) passing to the second focus converge after total reflection (13) on one of the two carrier surfaces (O.1) in the area of the line image (3) disposed on the other carrier surface (0.2).

4. The apparatus according to any of the above claims, **characterized in that** the concavely curved mirror surface (7) of the mirror (5) is configured as an ellipsoid.

5. The apparatus according to any of the above claims, **characterized in that** the mirror surface (7) is provided on the back of the mirror (5) illuminated by the light source (6) from the front.

6. The apparatus according to any of the above claims, **characterized in that** the mirror (5) is bonded to the carrier (2).

7. The apparatus according to any of the above claims, **characterized in that** the line image (6) is formed by a diffractive and/or scattering microstructuring on the carrier surface.

8. Use of the apparatus according to any of the above claims for an aiming telescope.

## Revendications

1. Dispositif qui comprend une source (6) de lumière et un réticule (1) constitué d'un support (2) et d'un trait (3) prévu sur la surface (0.1, 0.2) du support, lequel trait émet depuis la surface du support la lumière de la source (6) de lumière disposée latéralement,
**caractérisé par**
un miroir (5) fixé latéralement sur le réticule (1) et présentant deux points focaux (8, 9), la surface réfléchissante (7) du miroir (5) présentant une courbure concave, la source (6) de lumière étant disposée sur le côté avant du miroir (5) dans la zone occupée par le premier point focal (8) et les rayons lumineux (12) qui s'étendent vers le deuxième point focal (9) éclairant le trait (3).

2. Dispositif selon la revendication 1, **caractérisé en ce que** le trait (3) est disposé dans la zone occupée par le deuxième point focal (9).

3. Dispositif selon la revendication 1, **caractérisé en ce que** les rayons lumineux (12) qui s'étendent vers le deuxième point focal se rassemblent après réflexion totale (13) sur l'une (0.1) des deux surfaces du support dans la zone du trait (3) disposé sur l'autre (0.2) surface du support.

4. Dispositif selon l'une des revendications précédentes, **caractérisé en ce que** la surface réfléchissante (7) du miroir (5) à courbure concave a la forme d'un ellipsoïde.

5. Dispositif selon l'une des revendications précédentes, **caractérisé en ce que** la surface réfléchissante (7) est prévue sur le côté dorsal du miroir (5) éclairé par l'avant par la source (6) de lumière.

6. Dispositif selon l'une des revendications précédentes, **caractérisé en ce que** le miroir (5) est collé sur le support (2).

7. Dispositif selon l'une des revendications précédentes, **caractérisé en ce que** le trait (3) est formé par une microstructuration diffractante et/ou diffusante ménagée sur la surface du support.

8. Utilisation du dispositif selon l'une des revendications précédentes dans une lunette de visée.
